Europäisches Patentamt

**European Patent Office**

Office européen des brevets

(11) Veröffentlichungsnummer: **0 156 388**

**A2**

(12) **EUROPÄISCHE PATENTANMELDUNG**

(21) Anmeldenummer: **85103743.2**

(22) Anmeldetag: **28.03.85**

(51) Int. Cl.⁴: **G 06 F 11/16**

(30) Priorität **30.03.84 DE 3412049**

(43) Veröffentlichungstag der Anmeldung:
**02.10.85 Patentblatt 85/40**

(84) Benannte Vertragsstaaten:
**AT BE CH FR GB IT LI NL SE**

(71) Anmelder: **Licentia Patent-Verwaltungs-GmbH**
**Theodor-Stern-Kai 1**
**D-6000 Frankfurt/Main 70(DE)**

(72) Erfinder: **Kloppenburg, Tjabbe, Dipl.-Math.**
**Innsbrucker Strasse 20**
**D-1000 Berlin 62(DE)**

(72) Erfinder: **Bergmann, Eberhard, Dr.-Ing.**
**Regensburger Strasse 32**
**D-1000 Berlin 30(DE)**

(72) Erfinder: **Brauer, Harri, Dipl.-Ing.**
**Theodorstrasse 1**
**D-1000 Berlin 42(DE)**

(72) Erfinder: **Czech, Dietmar, Dipl.-Ing.**
**Sarntaler Weg 12**
**D-1000 Berlin 45(DE)**

(72) Erfinder: **Kraffel, Burkhardt, Dipl.-Ing.**
**Sarazinstrasse 25**
**D-1000 Berlin 41(DE)**

(72) Erfinder: **Prehn, Wolfgang, Dipl.-Ing.**
**Wichmannstrasse 18**
**D-1000 Berlin 30(DE)**

(74) Vertreter: **Lertes, Kurt, Dr. et al,**
**Licentia Patent-Verwaltungs-GmbH Theodor-Stern-Kai 1**
**D-6000 Frankfurt/M 70(DE)**

(54) **Signaltechnisch sichere Datenverarbeitungseinrichtung.**

(57) Für ein signaltechnisch sicheres Datenverarbeitungssystem mit mindestens zwei Kanälen und Ausgabevergleichem besteht die Aufgabe, gesicherte Daten sicher zu verarbeiten. Dies wird dadurch gelöst, daß die Kanäle zu definierten Zeitpunkten oder Ereignissen über eine Rechnerkopplung bei unabhängiger Arbeitsweise kommunizieren, und eine dynamisiert gesteuerte signaltechnisch sichere Spannungsversorgung für die Ausgabevergleicher vorhanden ist, die bei einem ausfallbedingten Fehler sicher abgeschaltet wird

FIG. 1

EP 0 156 388 A2

Licentia Patent-Verwaltungs-GmbH
Theodor-Stern-Kai 1
D-6000 Frankfurt 70

Krn/schb                                    B 84/18 Krn


<u>Signaltechnisch sichere Datenverarbeitungs-</u>
<u>einrichtung</u>



Die Erfindung bezieht sich auf eine signaltechnisch
sichere Datenverarbeitungseinrichtung gemäß dem Oberbegriff des Patentanspruches 1.

Bei der Steuerung von technischen Prozessen werden immer
mehr elektronische Einrichtungen eingesetzt, insbesondere
Prozeßrechner und Mikrocomputer. Das geschieht auch auf
den Gebieten der Sicherungstechnik, wie z.B. der Eisenbahnsignaltechnik, bei Verkehrsampelsteuerungen, Pipelineüberwachung, Pressensteuerungen, Kraftwerküberwachung usw. Dabei ist es besonders wichtig, daß keine
Menschenleben gefährdet werden. In allen diesen Fällen
ist daher das fail-safe Prinzip anzuwenden, d.h., daß
auch bei Störungen oder Fehlern in den Steuerungswerken
keine Signale abgegeben werden dürfen, welche für Mensch n oder Maschinen schädliche Folgen haben könnten.
Trotzdem soll ein zu großer Aufwand vermieden werden,
und es sollen daher weitgehend handelsübliche Bauteile
verwendet werden.

Es sind bereits mehrere Einrichtungen bekannt, die zur
Gewährleistung der Sicherheit aus zwei bzw. drei redundanten Rechnern bestehen.

0156388

In der DE-OS 26 12 100 ist eine digitale Datenverarbeitungsanordnung beschrieben, die zwei identische Rechner
aufweist, welche mit einer für beide Rechner gemeinsamen
Taktstromversorgung taktsynchron betrieben werden. Diese
Taktstromversorgung gibt nur dann den nächsten Programmschritt für die Datenverarbeitungsanordnung frei, wenn
ein Überwachungsimpuls die Kette von Vergleichern für
Adressen, Daten und Steuersignalen, die von beiden Rechnern gleichzeitig zu vergleichen sind, ordnungsgerecht
durchläuft. Bei einem negativen Vergleichsergebnis in
einem Vergleicher dieser Kette werden die Steuertakte
für beide Rechner gesperrt und die Stromversorgung für
die Rechner abgeschaltet. Damit führt bereits ein Fehler,
z.B. an einem dezentralen Ergänzungsbaustein zur Abschaltung der gesamten Datenverarbeitungsanlage, d.h. eine
Fehlertolerierung ist nicht möglich. Damit sind auch einkanalige Prozeßausgaben, z.B. für Diagnosezwecke, gesperrt.

In der Patentschrift DE 30 03 291 ist eine zweikanalige
Datenverarbeitungsanordnung beschrieben, bei der in Abänderung zur DE-OS 26 12 100 jedem Mikrocomputer eine
Vergleichereinrichtung und ein UND-Glied zugeordnet sind.
Die Ausgabe von Signalen an den Prozeß ist nur möglich,
wenn die beiden Mikrocomputer fehlerfrei arbeiten, d.h. in
den zentralen Vergleichern der Vergleich der Informationen
beider Mikrocimputer positiv ist.

Alle dezentralen Impulsverstärker für die einzelnen Prozeßausgaben werden gesperrt, wenn der Vergleich einer
Date bei mehreren gleichzeitig zum Vergleich anstehenden
Daten in der Vergleichseinrichtung eines Mikrocomputers
negativ ausfällt.

In der DE-OS 32 11 265 ist ein zweikanaliges Fail-safe-
Mikrocomputerschaltwerk beschrieben, das in Ergänzung
zur DE-OS 26 12 100 in der Lage ist, Eingabedaten der redundanten Eingangssignalumsetzer über beide Mikrocomputer in dem zentralen Vergleicher vergleichen zu können. Hierzu werden über zusätzliche Koppelschaltungen die Eingabedaten der Eingangssignalumsetzer nacheinander von beiden Mikrocomputern gelesen. Die vorher beschriebenen Nachteile des zentralen Vergleichers und der gemeinsamen Taktstromversorgung gelten auch hierbei.

In der DE-OS 32 25 455 ist ein redundantes Steuersystem mit zwei parallelgeschalteten Rechnereinheiten, die taktsynchron betrieben werden, beschrieben. In einem Überwachungssystem werden die Datensignale der redundanten Rechnereinheiten verglichen, der Fehler in der Rechnereinheit lokalisiert und auf den Ausgang der fehlerfreien Rechnereinheit umgeschaltet. Während dieser Zeit ist ein Vergleich der Datensignale nicht mehr möglich. Außerdem können Fehler in der Ausgabeeinheit der aktiven Rechnereinheit nicht direkt erkannt werden.

In der DE-OS 29 31 280 ist eine redundante Steueranordnung mit zwei asynchron arbeitenden Rechnern beschrieben, deren Ausgabedaten in Koinzidenzgliedern verglichen werden und bei Ungleichheit ein Fehlersignal abgeben. Über Rückmeldesignale der Koinzidenzglieder werden die Steueranordnungen synchronisiert.
In "Elektrisches Nachrichtenwesen" Band 52 (1977) Nr. 4, Seiten 322 bis 326 ist ein zweikanaliges Rechnersystem mit Synchronisation durch eine zentrale Interruptsteuerung beschrieben.
Es ist ferner ein Aufsatz über ein "Sicheres Mikrorechnersystem LOGISIRE", Verfasser H. Brauer aus der Zeitschrift "Signal und Draht" 76 (1984) Heft 3, Seiten 35 bis 41 bekannt. Hier ist auf Seite 37, Abschnitt 3.1 angegeben, daß bei Ausfall eines sogenannten Polling-Perioden-Signals oder zeitlichem Versatz dieser Signale beider Rechnerkanäle die Versorgungsspannung für alle sicheren Ausgaben sicher ausgeschaltet wird.

Der Erfindung liegt die Aufgabe zugrunde, gesicherte Daten signaltechnisch sicher zu verarbeiten, wobei fehlerhafte Teilfunktionen isoliert werden, ohne daß intakte Teilfunktionen hiervon beeinträchtigt werden, so daß auch nach Ausfällen noch ein gegebenenfalls eingeschränkter Betrieb durchgeführt werden kann. Kann eine korrekte Verarbeitung nicht mehr gewährleistet werden, sollen die Ausgänge der Einrichtung stromlos geschaltet werden.

Die Aufgabe wird nach der Erfindung durch die in dem Patentanspruch 1 angegebenen Merkmalen gelöst.

Die erfindungsgemäße Datenverarbeitungseinrichtung besteht aus zwei voneinander unabhängigen Rechnerkanälen, deren übereinstimmende Programme blocksynchron ablaufen. Ergänzt sind die Rechnerkanäle durch Ausgabevergleicher und eine oder mehrere zweikanalig,dynamisiert gesteuerte signaltechnisch sichere Spannungsversorgungen, die jeweils eine Gruppe von Ausgabevergleichern versorgen, von denen jeder die ihm angebotenen Signale nur dann passieren lassen, wenn diese übereinstimmen.

Zur blocksynchronen Arbeitsweise kommunizieren die Rechnerkanäle zu bestimmten Zeitpunkten und Ereignissen miteinander über die Rechnerkanalkopplung mit angeschlossenem Datenvergleich in jedem Rechnerkanal.

Die Kommunikation erfolgt mindestens
- nach Übernahme eines Eingabewertes oder mehrerer Eingabewerte
  - zur Prüfung auf Fehlerfreiheit des Eingebens, wobei nach Feststellung eines ausfallbedingten Fehlers weitere Werte der betroffenen Eingabeeinheit und der entsprechenden des anderen Rechnerkanals ignoriert werden;
  - zur Gewährleistung der Verarbeitung gleicher Werte trotz unterschiedlicher Eingangsdaten der Rechner, indem bei unterschiedlichen Werten die zuletzt in beiden Rechnerkanälen übereinstimmenden Werte verarbeitet werden,

- vor Ausgaben eines neuen Wertes

  - zur Prüfung auf Fehlerfreiheit der Verarbeitung, wobei nach Feststellung eines Fehlers die Spannungsversorgungen der Ausgabevergleicher von mindestens einem Rechnerkanal sicher abgeschaltet werden, indem die Ausgabe des als fehlerfrei angenommenen dynamisierten Steuersignals für die sichere Spannungsversorgung bewußt unterlassen wird;

- vor jedem programmgesteuerten Setzen einer Interruptsperre bzw. im regulären Betrieb nach jeder Unterbrechung eines laufenden Programmes durch ein anderes

  - zur Gewährleistung des logisch gleichartigen Ablaufs der parallelredundant arbeitenden Rechnerkanäle,

wobei nach einer Kommunikation aus unterschiedlichen Anlässen in den Rechnerkanälen durch eine geeignete Prioritätsregelung beide Rechnerkanäle an einander entsprechenden Punkten weiterarbeiten.


Die Kommunikation geschieht über eine zweikanalige Rechnerkanalkopplung pro Rechnerkanal, bei der jeder Kanal der Rechnerkanalkopplung einer Übertragungsrichtung zugeordnet ist und aus mehrbitbreiten FIFO-Speichern besteht, die von dem zugehörigen Rechnerkanal entweder nur beschrieben oder nur gelesen werden können. Die Rechnerkanalkopplungen sind so miteinander verbunden, daß die von einem Rechnerkanal geschriebenen Daten nach automatischer Übertragung in die Rechnerkanalkopplung des anderen Rechnerkanals nur von diesem dort gelesen werden können. Die Rechnerkanalkopplung wird in vorteilhafter Weise ergänzt durch einen programmgesteuerten Datenvergleich in jedem Rechnerkanal, der bei Vergleich die Daten des anderen Rechnerkanals zerstört, so daß die Daten der Rechnerkanäle physikalisch voneinander getrennt gehalten werden.

Bei jeder Kommunikation wird - wenn notwendig - ein Organisationskennzeichen übertragen, aus dem ersichtlich ist, aus welchem Anlaß kommuniziert wird. Bei unterschiedlichen Anlässen, erkennbar an den unterschiedlichen Organisationskennzeichen, wird durch eine Prioritätsregelung dafür gesorgt, daß noch der Kommunikation beide Rechnerkanäle an einander entsprechenden Programmpunkten weiterarbeiten. Bei einem Kommunikationsversuch von nur einem Rechnerkanal, bei dem der andere Rechnerkanal nicht innerhalb einer bestimmten Zeitdauer seine Bereitschaft zur Kommunikation gezeigt hat, werden die Spannungsversorgungen der Ausgabevergleicher von dem Rechnerkanal sicher abgeschaltet, dessen Kommunikationsversuch gescheitert war. So ist es möglich, zeitliche Abweichungen im Programmlauf der Rechnerkanäle zu erkennen, innerhalb vorgegebener Grenzen zu tolerieren und auszugleichen bzw. bei nicht tolerierbaren zeitlichen Abweichungen die Spannungsversorgungen der Ausgabevergleicher abzuschalten.

Diese Art der Rechnerkanalkopplung und Kommunikation der Rechnerkanäle ist nicht auf zweikanalige Systeme beschränkt, sondern kann auf mehrkanalige Systeme, insbesondere adaptive zwei-aus-drei-Systeme übertragen werden.

Die Einrichtung gemäß der Erfindung wird im folgend beschriebenen Ausführungsbeispiel an Hand der Zeichnung näher erläutert. In dem dargestellten Ausführungsbeispiel besteht die Einrichtung nach der Erfindung aus zwei Kanälen, jedoch können aus Verfügbarkeitsgründen auch drei Kanäle vorgesehen werden. Ebenso ist es möglich, eine solche Einrichtung mit einer weiteren oder mehreren zu einem Multiprocessingsystem zu verbinden.

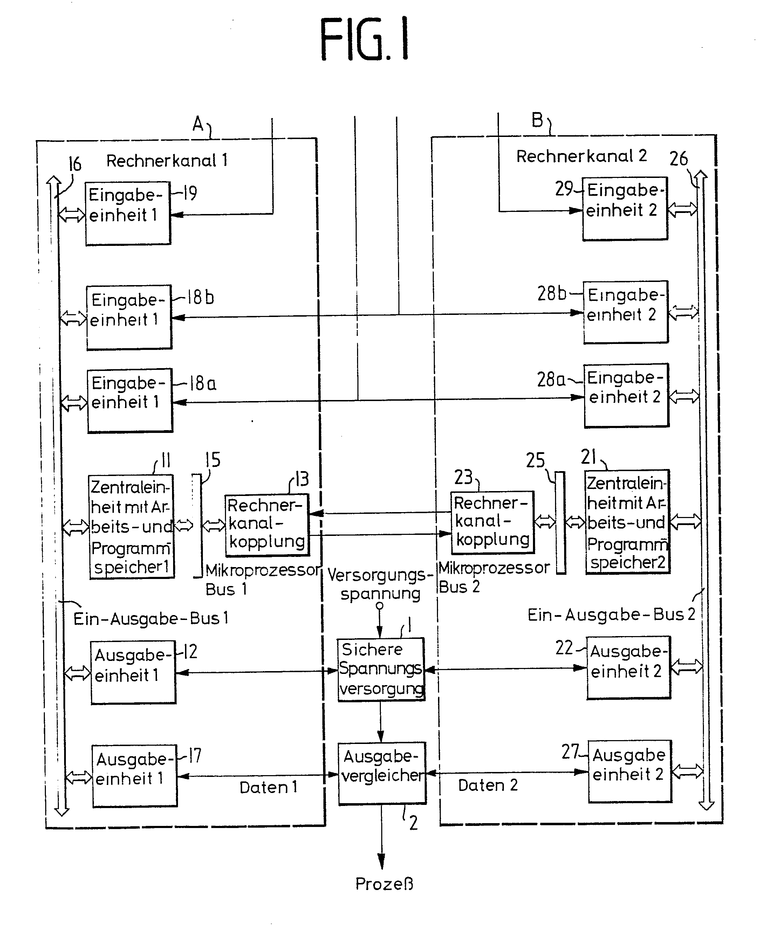

In der Fig. 1 sind mit A und B zwei Rechnerkanäle durch gestrichelte Umrandung bezeichnet, die in ihrer Struktur vollkommen gleich aufgebaut sind. Der Rechnerkanal A hat folgende Struktur:
an einem Bus 15 liegen die Zentraleinheit 11 mit Arbeits- und Programmspeicher und eine Rechnerkanalkopplung 13.

Die Arbeits- und Programmspeicher lassen sich im Bedarfsfall durch zusätzliche Baugruppen erweitern.

Die Zentraleinheit 11 steuert über den Ein- und Ausgabebus 16 die Eingabeeinheiten 18a, 18b, 19, die Ausgabeeinheiten 17, 12. Die Ein- und Ausgabeeinheiten unterscheiden sich bezüglich bitparalleler oder bitserieller Ein- oder Ausgabe. Im zweiten Rechnerkanal B sind die Zentraleinheit (mit Arbeits- und Programmspeicher) mit 21, der interne Bus mit 25, die Rechnerkanalkopplung mit 23, der Ein-Ausgabe-Bus mit 26, die Eingabeeinheiten mit 28a, 28b, 29, die Ausgabeeinheit mit 27 und 22 bezeichnet.

Für gesicherte Eingabe- und Ausgabewerte sind die Ein- und Ausgabeeinheiten in beiden Rechnerkanälen identisch vorhanden. Hierdurch lassen sich Einfachfehler und Leitungsunterbrechungen erkennen. Diese können somit nicht zu einem falschen Ergebnis führen.

In Fig. 1 sind zwei Eingabetypen dargestellt:
Bei dem einen Eingabetyp wird von einem durch Verdoppelung der Nutzinformation gesichertem, parallel anstehenden Eingabewert je eine vollständige Nutzinformation von den Rechnerkanälen A und B mit den Eingabeeinheiten 19 bzw. 29 eingelesen. Bei einem zweikanaligen System können die beiden Nutzinformationen zueinander äquivalent oder antivalent sein.

Unterschiede, die beim Einlesen der Eingabewerte auftreten, werden mittels Datenvergleich in beiden Rechnerkanälen erkannt. Hierzu werden die zu vergleichenden Daten über die Rechnerkanalkopplungen ausgetauscht. Beim anschließenden Datenvergleich werden die Daten des korrespondierenden Rechnerkanals vernichtet.

Wegen der Indentität der Vergleichsergebnisse erkennen beide Rechnerkanäle in gleicher Weise, ob die verglichenen Daten übereinstimmten. In beiden Rechnerkanälen werden nach dem Vergleich die zuletzt in beiden Rechnerkanälen übereinstimmenden Werte von den übereinstimmenden Programmen verarbeitet.

Bei dem anderen Eingabetyp wird von einem aus Nutz- und Sicherungsinformation bestehenden, parallel anstehenden Eingabewert sowohl die Nutzinformation als auch die Sicherheitsinformation den Eingabeeinheiten 18a und 18b des Rechnerkanals A und den Eingabeeinheiten 28a und 28b des Rechnerkanals B zugeführt. In vorteilhafter Weise kann durch eine schon bekannte Eingabesteuerung erreicht werden, daß zum Zeitpunkt des Einlesens der Daten, diese fixiert sind und damit einander entsprechende Eingabeeinheiten übereinstimmende Werte erfassen. In jedem Rechnerkanal wird geprüft, ob die aus der Nutzinformation ableit bare Sicherungsinformation mit der eingelesenen Sicherungsinformation übereinstimmt.

Die Ausgabe an den Prozeß erfolgt über getrennte Ausgabeeinheiten pro Rechnerkanal. In der Fig. 1 ist eine Ausgabe dargestellt, bei der die Daten der beiden Ausgabeeinheiten 17,27 in einem Ausgabe-Vergleicher 2 fail-safe verglichen werden. Nur bei zeitlicher und inhaltlicher Übereinstimmung der Daten werden diese an den Prozeß ausgegeben. Anderenfalls sperrt der Ausgabe-Vergleicher 2 die Ausgabe. Die Sperrung erfolgt auch bei einem Fehler im Vergleicher. Die Sperrung kann nur gezielt rückgängig gemacht werden. Die Ausgabevergleicher werden durch die zweikanalig, dynamisiert angesteuerte signaltechnisch sichere Spannungsversorgung mit Spannung versorgt. Bei sicherer Abschaltung der Spannungsversorgung wird die Ausgabe gesperrt.

Die Verarbeitung in den Rechnerkanälen erfolgt zyklisch. Hierzu wird von jedem Rechnerkanal ein Zeitinterrupt gebildet. In der Zeit zwischen zwei Zeitinterrupten werden die Prozeßeingaben eingelesen, findet die Programmverarbeitung statt und werden die Ausgaben an den Prozeß durchgeführt. In den Rechnerkanälen werden hierbei periodisch Steuersignale L1,L2 gebildet, die mit jedem Zeitinterrupt zwischen "H" und "L" wechseln.und der Sicheren Spannungsversorgung über die Ausgabeeinheiten 12,22 zugeführt. In der Sicheren Spannungsversorgung 1 werden diese Steuersignale fail-safe auf Polarität und Gleichzeitigkeit überwacht. Die Zeiten sind sowohl in den Rechnerkanälen aus auch auf der Sicheren Spannungsversorgung 1 einstellbar. Stimmen die Zeiten nicht überein, so wird die Versorgungsspannung für die Ausgabevergleicher 2 sicher abgeschaltet.

Der Start der Datenverarbeitungseinrichtung wird automatisch mit Einschalten der Spannungsversorgung für die Rechnerkanäle und für die Sichere Spannungsversorgung 1 vorgenommen. Im Rahmen einer Initialisierung wird die einwandfreie Funktion der Datenverarbeitungseinrichtung festgestellt. Danach wird von beiden Rechnerkanälen gleichzeitig ein Startsignal ST1, ST2 ausgegeben, das in der Sicheren Spannungsversorgung 1 fail-safe geprüft wird. Damit wird die Versorgungsspannung für die Ausgabevergleicher freigegeben

Im Fehlerfall und bei bewußter Unterdrückung des Steuersignals durch mindestens einen der Rechnerkanäle wird die Versorgungsspannung der Ausgabevergleicher abgeschaltet. Eine Wiedereinschaltung ist nur bei Fehlerfreiheit der Sicheren Spannungsversorgung durch fehlerfreien automatischen Einschaltvorgang möglich.

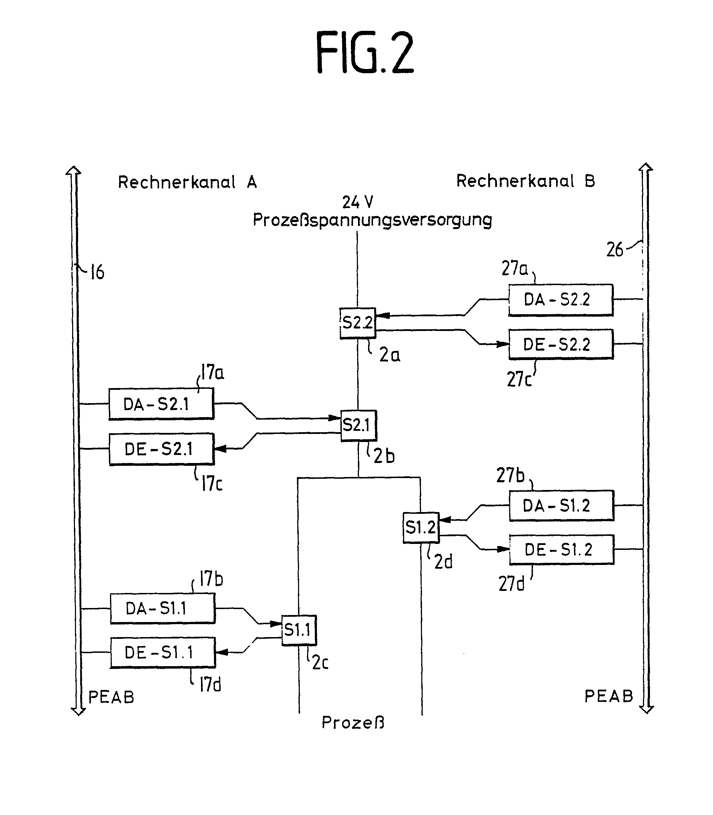

Die Fig. 2 zeigt eine Ausgabe mit einem redundant aufgebauten Ausgabevergleicher, der in Figur 1 mit 2 bezeichnet ist. Dieser umfaßt je Rechnerkanal zwei elektronische Leistungsschalter 2a,2b,2c,2d, die über die Ausgabeeinheiten 17a,17b,27a,27b gleichartig angesteuert werden, so daß im ausfallfreien Fall alle vier Schalter die gleiche Stellung haben. Um die Schaltstellung von den Rechnerkanälen erfassen zu können, gibt es zu jedem Schalter eine Rückmeldung 17c, 17d, 27c; 27d in den zugehörigen Rechnerkanal.
Die Leistungsschalter können wie in Fig. 2 so verschaltet werden, daß zwei Schalter, die nicht von demselben
Rechnerkanal angesteuert werden, zueinander parallel
liegen und beide in Serie zu den beiden anderen in Serie
liegenden Schaltern. Wie leicht erkennbar, läßt sich durch
Modifikation der Verschaltung auch ein rein zweikanalig
aufgebauter Ausgabevergleicher als auch ein einkanalig aufgebauter Ausgabevergleicher (Serienschaltung der vier
Leistungsschalter) hieraus ableiten.

Durch zyklische Überprüfung der einzelnen Elemente des
Ausgabe-Vergleichers 2 lassen sich Ausfälle rechtzeitig
offenbaren. Hierbei werden die Ergebnisse der Prüfung
von beiden Rechnerkanälen verglichen. Einzelne Fehler
in den Ein- oder Ausgabeeinheiten oder in den Ausgabeschaltern lassen sich tolerieren, ohne die Sicherheit zu
beeinflussen. Kann bei Eintreten eines weiteren Ausfalls
die Sicherheit nicht mehr gewährleistet werden, so wird
die Versorgungsspannung der Ausgabevergleicher sicher abgeschaltet, indem die Ausgabe des als fehlerfrei angenommenen dynamisierten Steuersignals für die Sichere Spannungsversorgung 1 von mindestens einem Rechnerkanal unterlassen wird.

Licentia Patent-Verwaltungs-GmbH

Theodor-Stern-Kai 1.

D-6000 Frankfurt 70

Krn/schb                                           B 84/18 Krn

Signaltechnisch sichere Datenverarbeitungseinrichtung

Patentansprüche

1. Signaltechnisch sichere Datenverarbeitungseinrichtung
   mit mindestens zwei Kanälen, die jeweils einen Rechner
   enthalten, welche Eingangsdaten nach übereinstimmenden
   Programmen blocksynchron verarbeiten, wobei die Ausgangssignale der Kanäle, die die Ausgangssignale der
   Datenverarbeitungseinrichtung erzeugen sollen, Ausgabevergleichern zugeführt werden, die diese Signale nur
   bei Übereinstimmung passieren lassen und sonst ein ungefährliches Standardsignal abgeben,
   gekennzeichnet durch folgende Merkmale:
   - die Rechnerkanäle (A,B), jeweils bestehend aus einer
     Zentraleinheit (11 bzw. 21) mit Programm- und Arbeitsspeicher, Ein- und Ausgabeeinheiten (18a,18b,19,12,17
     bzw. 28a,28b,29,22,27) mit zugehörigem E/A-Bus (16
     bzw. 26) sowie einer zweikanaligen Rechnerkanalkopplung (13 bzw.23), die entweder über den E/A-Bus (16
     bzw.26) oder den internen Bus (15 bzw. 25) betrieben
     wird, kommunizieren zu definierten Zeitpunkten oder
     Ereignissen über die zweikanalige Rechnerkanalkopp-
     lung mit angeschlossenem programmgesteuerten Daten-
     vergleich in jedem Rechnerkanal miteinander zur

- Prüfung auf fehlerfreie Dateneingabe und Verarbeitung, wobei nach Feststellung eines ausfallbedingten Fehlers die betroffene Einrichtung isoliert bzw. die Spannungsversorgung der Ausgabevergleicher (2) sicher abgeschaltet wird,

- Gewährleistung gleichartiger Verarbeitung trotz unterschiedlicher Eingangsdaten der Rechner,

- Gewährleistung der blocksynchronen Arbeitsweise bei Beginn eines jeden logisch neuen Verarbeitungsschrittes

und arbeiten trotz Kommunikation unabhängig voneinander,

- eine oder mehrere zweikanalig, dynamisiert gesteuerte signaltechnisch sichere Spannungsversorgungen (1) versorgen jeweils einen oder eine Gruppe von Ausgabevergleichern (2), von denen jeder ein bestimmtes Ausfallverhalten besitzt und entweder selbst oder innerhalb der zugehörigen Gruppe in Verbindung mit ihrer Spannungsversorgung signaltechnisch sicher ist.

2. Datenverarbeitungseinrichtung nach Anspruch 1, dadurch gekennzeichnet, daß von einem durch Vervielfachung der Nutzinformation gesicherten parallel anstehenden Eingabewert jeweils eine vollständige Nutzinformation auf je eine Eingabeeinheit (19 bzw. 29) eines jeden Rechnerkanals geführt wird und daß bei anders gesicherten parallel anstehenden Eingabewerten sowohl die Nutzinformation als auch die Sicherungsinformation auf je eine Eingabeeinheit (18a,18b bzw. 28a,28b) eines jeden Rechnerkanals geführt ist.

3. Datenverarbeitungseinrichtung nach Anspruch 2, dadurch gekennzeichnet, daß Eingabewerte, die beiden Rechnerkanälen zugeführt werden, durch eine an sich bekannte Eingabesteuereinrichtung für die Zeit des Einlesens fixiert werden.

4. Datenverarbeitungseinrichtung nach Anspruch 1, dadurch gekennzeichnet, daß Ausgabevergleicher (2) für parallele Ausgaben redundant aufgebaut sind, so daß sie dadurch ein bestimmtes Ausfallverhalten zeigen und bei Kurzschluß von Schaltern im Ausgabevergleicher Ausfall von Ausgabeeinheiten oder deren Rückmeldeeingaben solange aktiv bleiben können, bis die Sicherheit bei Hinzutreten eines weiteren Ausfalls nicht mehr gewährleistet werden kann und deren Spannungsversorgung vor diesem Ausfall sicher abgeschaltet wird.

# FIG.1

# FIG.2

Rechnerkanal A                              Rechnerkanal B

24 V
Prozeßspannungsversorgung

16                                                                    26

27a

DA–S2.2

S2.2
2a                          DE–S2.2
                                           27c

17a

DA–S2.1

DE–S2.1            S2.1
17c                2b

                                           27b

                           DA–S1.2

17b                        S1.2            DE–S1.2
                           2d             27d

DA–S1.1

DE–S1.1            S1.1
17d                2c

PEAB                                              PEAB

Prozeß